# EUROPEAN PATENT APPLICATION

(11) **EP 4 597 373 A1**
(43) Date of publication of application: **06.08.2025**
(21) Application number: 25154758.4
(22) Date of filing: 29.01.2025
(51) Int. Cl.: G06N 3/094

(54) **A FRAMEWORK TO ASSESS THE VULNERABILITY OF AN AI SYSTEM AND A METHOD THEREOF**

(30) Priority: 31.01.2024 IN 202441006640
(71) Applicant: Robert Bosch GmbH, 70442 Stuttgart (DE); Bosch Global Software Technologies Private Limited, Karnataka, Bangalore 560095 (IN)
(72) Inventor: Amballa, Avinash, 535217 Andhrapradesh (IN); Parmar, Manojkumar Somabhai, 38008 Ahmedabad, Gujarat (IN); Yuvaraj, Govindarajulu, 560102 Bengaluru, Karnataka (IN); Kulkarni, Pavan, 580030 Karnataka (IN)
(74) Representative: Bee, Joachim

(57) **Abstract**

The present invention proposes a framework (100) for assessing vulnerability of an AI system (10). The framework (100) comprises the AI system (10) that is in communication with a processor (11). The AI system (10) is configured to process an input via the AI Model (M) and give an output within pre-defined functional characteristics. The processor (11) is configured to generate a perturbed input x'' with minimum sparsity, which when fed as input to the AI Model (M) gives an output within pre-defined functional characteristics . The processor (11) records the inference time (T) of the AI Model (M) for processing x". The vulnerability of the AI Model (M) is assessed based on analysis of real-time inputs processed and the inference time (T).

## Description

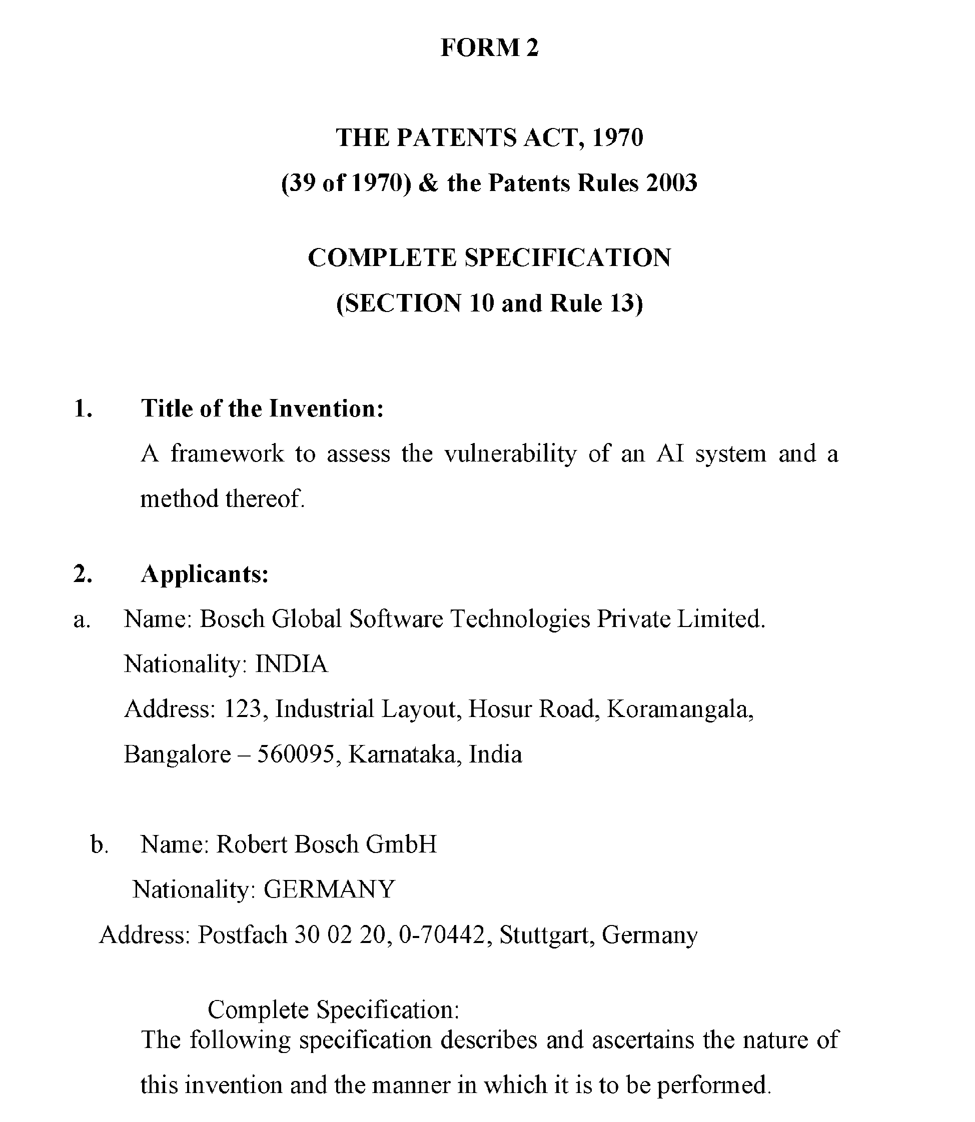

### Field of the invention

The present disclosure relates to the field of Artificial Intelligence security. In particular, it proposes a method of assessing vulnerability of an AI system and a framework thereof.

### Background of the invention

With the advent of data science, data processing and decision-making systems are implemented using artificial intelligence modules. The artificial intelligence modules use different techniques like machine learning, neural networks, deep learning etc. Most of the AI based systems, receive large amounts of data and process the data to train AI models. Trained AI models generate output based on the use cases requested by the user. Typically the AI systems are used in the fields of computer vision, speech recognition, natural language processing, audio recognition, healthcare, autonomous driving, manufacturing, robotics etc. where they process data to generate required output based on certain rules/intelligence acquired through training.

To process the inputs and give a desired output, the AI systems use various models/algorithms which are trained using the training data. Once the AI system is trained using the training data, the AI systems use the models to analyze the real time data and generate appropriate result. The models may be fine-tuned in real-time based on the results. The models in the AI systems form the core of the system. Lots of effort, resources (tangible and intangible), and knowledge goes into developing these models.

It is possible that some adversary may try to tamper/manipulate/evade the model in AI Systems to create incorrect outputs. The adversary may use different techniques to manipulate the output of the model. As the AI model forms the core of the AI system, the module needs to be protected against attacks. The most common types of adversarial threats can be largely categorized into - model extraction attacks, inference attacks, evasion attacks, and data poisoning attacks. In model extraction attacks, the attacker gains information about the model internals through analysis of input, output, and other external information. Inference attacks attempt to infer the training data from the corresponding output or other information leaked by the target model. In poisoning attacks, the adversarial carefully inject crafted data to contaminate the training data which eventually affects the functionality of the AI system. In Evasion attacks, the attacker works on the AI algorithm's inputs to find small perturbations leading to large modifications of its outputs (e.g., decision errors) which leads to evasion of the AI model. In sponge attacks, the attacker manipulates the input in a way that the energy and the run-time of the model inference is increased. Thereby causing a compromise in the response time and Quality of Service of the AI System.

The present disclosure deals with Sponge attacks or energy-latency attacks. These attacks are targeted towards an AI system with the goal of increasing the energy consumption and the run-time (latency) of the system, thereby causing system performance degradation and Denial-of-service of the system. This is particularly a concern for AI system running on battery-operated devices. Battery operated devices largely rely on low-power and energy consumption for longer battery life and operation times. For several real-time applications such as industrial robots and autonomous driving, real-time response of the AI System is mission critical. An attack targeting system runtime will largely affect such system's performance.

This will cause hardships to the original developer of the AI in the form of business disadvantages, loss of confidential information, loss of lead time spent in development, loss of intellectual properties, loss of future revenues etc. Hence, there is a need to assess the vulnerability of the AI system against those sponge attack-based input queries.

Non-Patent literature titled "Energy-Latency Attacks via Sponge Poisoning1" discloses a threat vector against neural networks whose energy consumption or ¹ Shumailov, I., Zhao, Y., Bates, D., Papernot, N., Mullins, R. and Anderson, R., 2021, September. Sponge examples: Energy-latency attacks on neural networks. In 2021 IEEE European symposium on security and privacy (EuroS&P) (pp. 212-231). IEEE. decision latency are critical. These adversaries can be exploit carefully-crafted sponge examples, which are inputs designed to maximize energy consumption and latency, to drive machine learning (ML) systems towards their worst-case performance. Sponge examples are the first denial-of-service attack against the ML components of such systems. The paper mounts two variants of sponge attack on a wide range of state-of-the-art neural network models. Sponge examples frequently increase both latency and energy consumption of these models by a factor of 30×. Extensive experiments show that our new attack is effective across different hardware platforms (CPU, GPU and an ASIC simulator) on a wide range of different language tasks.

### Brief description of the accompanying drawings

An embodiment of the invention is described with reference to the following accompanying drawings:
Figure 1 depicts a framework for assessing vulnerability AI system (10);
Figure 2 illustrates method steps (200) of assessing vulnerability of an AI system (10);
Figure 3 is a graphical illustration for processing time of AI Model (M) for a batch of inputs.

### Detailed description of the drawings

Some important aspects of the AI technology and AI systems can be explained as follows. Depending on the architecture of the implements AI systems may include many components. One such component is an AI module. An AI module with reference to this disclosure can be explained as a component which runs a model. A model can be defined as reference or an inference set of data, which uses different forms of correlation matrices. Using these models and the data from these models, correlations can be established between different types of data to arrive at some logical understanding of the data. A person skilled in the art would be aware of the different types of AI models such as linear regression, naive bayes classifier, support vector machine, neural networks and the like.

Some of the typical tasks performed by AI systems are classification, clustering, regression etc. Majority of classification tasks depend upon labeled datasets; that is, the data sets are labelled manually in order for a neural network to learn the correlation between labels and data. This is known as supervised learning. Some of the typical applications of classifications are: face recognition, object identification, gesture recognition, voice recognition etc. In a regression task, the model is trained based on labeled datasets, where the target labels are numeric values. Some of the typical applications of regressions are: Weather forecasting, Stock price predictions, House price estimation, energy consumption forecasting etc. Clustering or grouping is the detection of similarities in the inputs. The cluster learning techniques do not require labels to detect similarities. Learning without labels is called unsupervised learning. Unlabeled data is the majority of data in the world.

It must be understood that this disclosure is not specific to the type of model being executed in the AI module and can be applied to any AI module irrespective of the AI model being executed. A person skilled in the art will also appreciate that the AI module may be implemented as a set of software instructions, combination of software and hardware or any combination of the same.

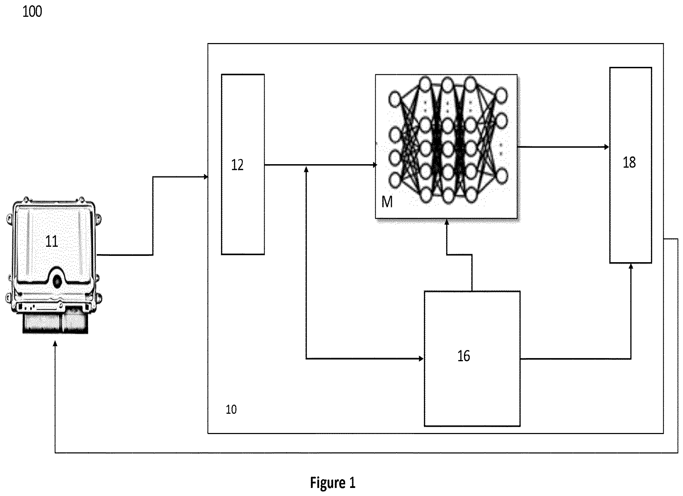

Figure 1 depicts a framework (100) for assessing vulnerability of an AI system (10). The framework (100) comprises the AI system (10) that is in communication with a processor (11). The AI system (10) is configured to process an input via the AI Model (M) and give an output within pre-defined functional characteristics. Pre-defined functional performance boundaries are characteristics of output defined by accuracy, precision, recall, mean-squared error, mean average error, IoU (Intersection over Union) and other relevant metrics specific to the AI Model (M)'s domain, such as time series forecasting error, object detection precision , natural language processing recall / accuracy, tabular data regression error and, similar parameters in various scenarios.

Generally, the processor (11) may be implemented as any or a combination of: one or more microchips or integrated circuits interconnected using a parent board, hardwired logic, software stored by a memory device and executed by a microprocessor (11), firmware, an application specific integrated circuit (ASIC), and/or a field programmable gate array (FPGA).

The processor (11) is configured to add a pre-determined perturbation in the input (x) by decreasing the sparsity of the received input to obtain (x'); feed x' as input to the AI Model (M) to get an output; check if the output is within the pre-defined functional performance boundaries; adjust the sparsity in the input (x) to obtain an input with minimum sparsity (x") for which the output of the AI Model (M) doesn't deviate from the pre-defined functional performance boundaries; record the inference time (T) of the AI Model (M) for processing x"; assess the vulnerability of the AI Model (M) based on analysis of real-time inputs processed and the inference time (T). The functionality of the processor (11) in further elaborated in accordance with method steps (200).

The AI system (10) comprises the AI Model (M) and at least a defense model (16) amongst other components known to a person skilled in the art such as the input interface (12), output interface (18) and the like. For simplicity only components having a bearing on the methodology disclosed in the present invention have been elucidated.

The defense model (16) is configured to identify an adversarial input/ attack vector from the input. It can be designed or built-in multiple ways to achieve in ultimate functionality of identifying an attack vector from amongst the input. The defense model (16) is configured to block a user based on assessment received from the processor (11). The defense model (16) is further configured to restrict an output based on assessment received from the processor (11).

As used in this application, the terms "component," "model," "module," "interface," are intended to refer to a computer-related entity or an entity related to, or that is part of, an operational apparatus with one or more specific functionalities, wherein such entities can be either hardware, a combination of hardware and software, software, or software in execution. As further yet another example, interface(s) can include input/output (I/O) components as well as associated processor (11), application, or Application Programming Interface (API) components. These various modules can either be a software embedded in a single chip or a combination of software and hardware where each module and its functionality is executed by separate independent chips connected to each other to function as a system. The AI Model (M) is a neural network could be embedded on a separate neural network chip.

It should be understood at the outset that, although exemplary embodiments are illustrated in the figures and described below, the present disclosure should in no way be limited to the exemplary implementations and techniques illustrated in the drawings and described below.

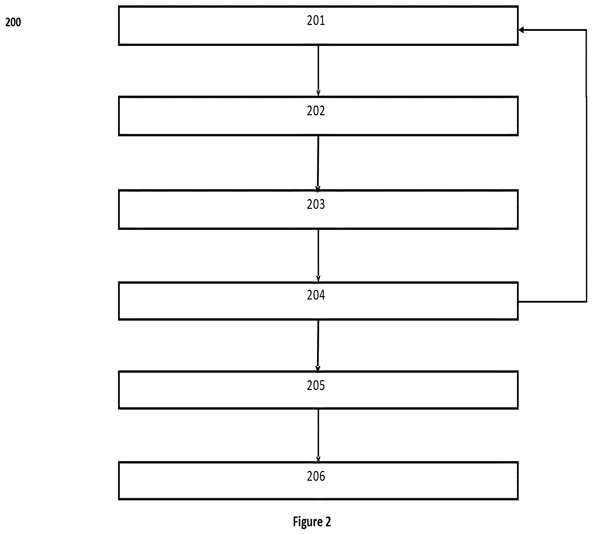

Figure 2 illustrates method steps of assessing vulnerability of an AI system (10). The AI system (10) and a processor (11) used to assess vulnerability of the AI system (10) have been explained in accordance with figure 1. The method steps (200) are executed by the processor (11).

Method step 201 comprises adding a pre-determined perturbation in the input (x) by decreasing the sparsity of the received input to obtain (x'). For a given AI Model (M) network M, in a white box setting we have access to all the intermediate layers outputs including the output layer. In an exemplary embodiment of the proposed invention, M has activations such as ReLu (rectified linear unit). The sparsity of the network for a given input x is defined as the number of zeros in the all the ReLu layers when the input x is passed.

Method step 202 comprises processing the AI Model (M) with x' as input to get an output. Method step 203 comprises checking if the output is within the pre-defined functional performance boundaries. The pre-defined functional performance boundaries are characteristics of output defined by accuracy, precision, recall, mean-squared error, mean average error, IoU and other relevant metrics specific to the AI Model (M)'s domain, such as time series forecasting error, object detection precision, natural language processing recall / accuracy, tabular data regression error and, similar parameters in various scenarios.

Method step 204 comprises adjusting the sparsity in the input (x) to obtain an input with minimum sparsity (x") for which the output of the AI Model (M) doesn't deviate from the pre-defined functional performance boundaries. Hence the method step 204 basically comprises repeating the method steps 201, 202, 203 until we reach a perturbed input with minimum sparsity (x") for which the output of the AI Model (M) is within the pre-defined functional performance. For example, assume a classification type AI Model (M) trained to classify images into two classes of plants and animals. We can add the maximum possible perturbation in the image of a plant that reduces it to a plant image with minimum sparsity, provided the AI Model (M) still classifies it as a plant and not an animal. Similarly for an AI Model (M) configured to calculate a numerical value, we can add the maximum possible perturbation in the input that reduces it to minimum sparsity, provided the AI Model (M) still gives the numerical value with an error of +/- 1%.

Method step 205 comprises recording the inference time (T) of the AI Model (M) for processing x''. The idea is to make the most of the activations in these intermediate layers to fire (For ex: In a ReLu activation, if the input is negative, it is set to zero, so if we make the inputs received by the pre_ReLu layer (layer before applying ReLU) to be non-negative, we get of the activations non-zero, resulting in more floating-point operations, therefore increasing inference time) We choose the loss function to be loss L = -Σ (*pre_ReLu ouput*)*n Nn=*0 where N is the number of layers in the network M. This inference time (T) is maximum acceptable time that the AI Model (M) M should take to process a input.

Method step 206 comprises assessing the vulnerability of the AI Model (M) based on analysis of real-time inputs processed and the inference time (T). For real time incoming inputs, the processing time of the AI Model (M) is compared with the inference time (T). The AI Model (M) is deemed as vulnerable if it takes more than the inference time (T) to process incoming inputs.

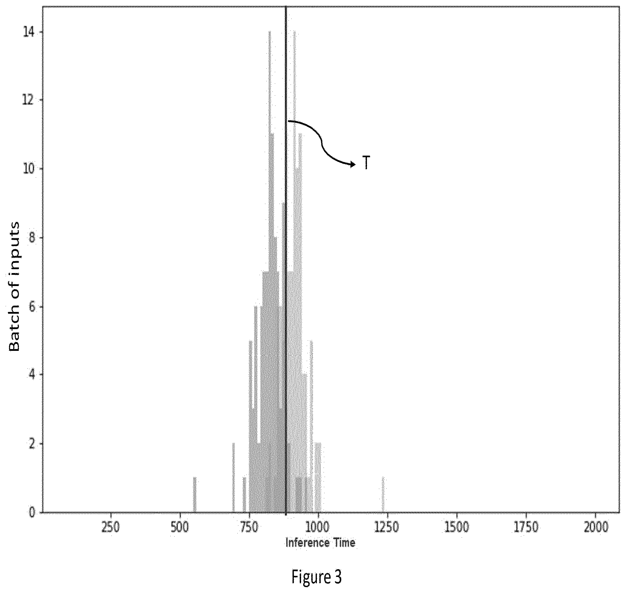

Figure 3 is a graphical illustration for processing time of AI Model (M) for a batch of inputs. The inference time (T) marked in the graph separates the adversarial inputs from the non-adversarial inputs. The batch of inputs taking longer that "T" are deemed as adversarial. The rationale behind this is that if the AI Model (M) is taking more than the time "T" to process an input, it means that the input beyond the maximum acceptable sparsity. This in turn means that the input in manipulated or an adversarial input manifested to increase the processing time of the AI Model (M). Further the AI system (10) is configured to take remedial measures in dependance of the assessment received from the processor (11). The defense model (16) is configured to block a user based on assessment received from the processor (11). The defense model (16) is further configured to restrict an output based on assessment received from the processor (11).

The proposed system and method has a multiple real-world use cases of critical importance. In Manufacturing: Consider a factory that relies heavily on AI-driven predictive maintenance systems to optimize the operation of its machinery. An adversary executes a sponge attack by feeding the system specially crafted data that significantly increases the computational workload of the AI models. These models, which typically analyze sensor data to predict machine failures, now require much more energy to process the manipulated inputs. This leads to a rapid drain on computational resources, increased energy consumption, and potentially overheating of the hardware. As a result, the AI system becomes slower, causing delays in maintenance predictions. In a worst-case scenario, this could lead to undetected machinery wear and tear, resulting in unexpected breakdowns, production halts, and substantial financial losses. The increased energy use also inflates operational costs and carbon footprint, undermining the factory's efficiency and environmental sustainability goals.

The proposed framework using the method to assess the model must be used before deployment in such a critical infrastructure. Assessing and preventing sponge attacks in sectors like healthcare, energy, and other critical infrastructures offers significant advantages. In healthcare, safeguarding AI systems against these attacks ensures reliable and timely analysis of medical images or patient data, directly contributing to patient safety and effective treatment outcomes. For the energy sector, protecting AI-driven systems that monitor and control grid operations from sponge attacks is vital for maintaining energy efficiency and preventing disruptions in power supply, which can have widespread consequences. In other critical infrastructures, such as transportation or water treatment facilities, thwarting sponge attacks is crucial for ensuring uninterrupted service delivery. This not only prevents potential public safety hazards but also maintains public trust in these essential services. Overall, robust defense against sponge attacks is fundamental in these sectors to ensure operational continuity, safeguard public safety, and uphold the efficiency and reliability of critical services.

It must be understood that the invention in particular discloses methodology used for assessing vulnerability of an AI system (10). The embodiments explained in the above detailed description are only illustrative and do not limit the scope of this invention. Any subsidiary modification to the framework (100) and any adaptation of the method for assessing vulnerability of an AI system (10) are envisaged and form a part of this invention. The scope of this invention is limited only by the claims.

## Claims

1. A method (200) of assessing vulnerability of an AI Model (M) in an AI system (10), the AI Model (M) configured to process an input (x) and give an output within pre-defined functional performance boundaries, the method steps comprising:
adding (201) a pre-determined perturbation in the input (x) by decreasing the sparsity of the received input to obtain (x');
processing (202) the AI Model (M) with x' as input to get an output;
checking (203) if the output is within the pre-defined functional performance boundaries;
adjusting (204) the sparsity in the input (x) to obtain an input with minimum sparsity (x'') for which the output of the AI Model (M) doesn't deviate from the pre-defined functional performance boundaries;
recording (205) the inference time (T) of the AI Model (M) for processing x";
assessing (206) the vulnerability of the AI Model (M) based on analysis of real-time inputs processed and the inference time (T).

2. The method (200) of assessing vulnerability of an AI Model (M) as claimed in claim 1, wherein pre-defined functional performance boundaries are characteristics of output defined by accuracy, precision and error.

3. The method (200) of assessing vulnerability of an AI Model (M) as claimed in claim 1, wherein the AI Model (M) is deemed as vulnerable if it takes more than the inference time (T) to process incoming inputs.

4. A framework (100) adapted to assess vulnerability of an AI Model (M) in an AI system (10), the AI Model (M) configured to process an input (x) and give an output within pre-defined functional performance boundaries, the framework (100) comprising a processor (11) in communication with the AI system (10), the AI system (10) comprising an AI Model (M) and at least a defense model, **characterized in that** framework (100):
the processor (11) configured to:
add a pre-determined perturbation in the input (x) by decreasing the sparsity of the received input to obtain (x');
feed x' as input to the AI Model (M) to get an output;
check if the output is within the pre-defined functional performance boundaries;
adjust the sparsity in the input (x) to obtain an input with minimum sparsity (x") for which the output of the AI Model (M) doesn't deviate from the pre-defined functional performance boundaries;
record the inference time (T) of the AI Model (M) for processing x";
assess the vulnerability of the AI Model (M) based on analysis of real-time inputs processed and the inference time (T).

5. The framework (100) adapted to assess vulnerability of an AI Model (M) in an AI system (10) as claimed in claim 5, wherein pre-defined functional performance boundaries are characteristics of output defined by accuracy, precision and error.

6. The framework (100) adapted to assess vulnerability of an AI Model (M) in an AI system (10) as claimed in claim 5, wherein the AI Model (M) is deemed as vulnerable if it takes more than the inference time (T) to process incoming inputs.

7. The framework (100) adapted to assess vulnerability of an AI Model (M) in an AI system (10) as claimed in claim 5, wherein the defense model (16) is configured to block a user based on assessment received from the processor (11).

8. The framework (100) adapted to assess vulnerability of an AI Model (M) in an AI system (10) as claimed in claim 5, wherein the defense model (16) is configured to restrict an output based on assessment received from the processor (11).
